# EUROPÄISCHE PATENTSCHRIFT

(11) **EP 0 590 500 B1**
(45) Veröffentlichungstag und Bekanntmachung des Hinweises auf die Patenterteilung: **20.11.1996**
(21) Anmeldenummer: 93115281.3
(22) Anmeldetag: 22.09.1993
(51) Int. Cl.: H04M 1/57, H04M 1/66

(54) **Mobiltelefon mit Identifizierung des Anrufers**
Mobile telephone with caller identification
Téléphone mobile avec identification de l'appelant

(30) Priorität: 01.10.1992 DE 4233068
(43) Veröffentlichungstag der Anmeldung: 06.04.1994
(73) Patentinhaber: SIEMENS AKTIENGESELLSCHAFT, 80333 München (DE)
(72) Erfinder: Christal, Philip, D-85646 Anzing (DE); Brockdorff von, Christian, Dipl.-Ing., D-82057 Icking (DE)

(56) Entgegenhaltungen:
- EP-A- 0 347 155
- EP-A- 0 494 525
- WO-A-90/03068
- PATENT ABSTRACTS OF JAPAN vol. 15, no. 200 (E-1070)22. Mai 1991 & JP-A-30 054 987 (HITACHI LTD)
- PATENT ABSTRACTS OF JAPAN vol. 16, no. 104 (E-1178)13. März 1992 & JP-A-32 080 798 (NEC CORP.)
- PATENT ABSTRACTS OF JAPAN vol. 16, no. 381 (E-1248)14. August 1992 & JP-A-41 022 135 (NEC CORP.)

## Beschreibung

Die Erfindung bezieht sich auf ein Mobiltelefon mit einem Tastenfeld mit Wähl- und Funktionstasten und einem Anzeigefeld und mit ggf. im Bedienteil integrierten Sende-/ Empfangseinrichtungen (Handheld) sowie mit einer Vorrichtung zur Rufnummernanzeige des Anrufers und Identifizierung von dessen Rufnummer, die verglichen wird mit nach entsprechenden Kriterien in einem Rufnummernspeicher des Benutzers abgelegten Rufnummern, deren zugehöriger Name am Display angezeigt wird. Anruf-Kontroll-Einrichtung für die Selektierung der Rufanzeige durch den Benutzer derart, daß der Anruf angenommen und eine Anrufsignalisierung initiiert wird, wenn die Rufnummer einer im Nummernspeicher des Benutzers enthaltenen entspricht, und daß bei nicht vorhandener Übereinstimmung der Rufnummer mit einer im Nummernspeicher enthaltenen Nummer der Anruf entweder umgeleitet oder an eine Mail-Box gegeben wird.

Ein solches Mobiltelefon ist aus der EP-A-0 494 525 bekannt.

Es ist übliche Geschäftspraxis, eine Ruf-Anzeige vorzunehmen, normalerweise unter Einschaltung einer Sekretärin, so daß unerwünschte Rufe ignoriert werden können oder Nachrichten aufgenommen werden mit der Möglichkeit eines Rückrufs zu einem geeigneten Zeitpunkt. Die Einführung von Anrufer-Identität (Caller Line Identity - CLI) im GSM (Group Special Mobile) versetzt die Benutzer in die Lage, die Nummer des Anrufers zu sehen. Während die Anrufer-Identität technisch spezifiziert ist, ist es von der Benutzerseite her nicht der Fall, und es bestehen Möglichkeiten für eine effektive Durchführung der Ruf-Anzeige. Innerhalb einer Festdrahtinstallation (PABX), wie im ISDN, ist es zunehmend üblich, den Namen anstelle der Nummer eines ankommenden Rufs anzuzeigen, wozu das System-Memory verwendet wird. Allerdings besteht bisher keine Einrichtung, die ankommende Rufe gezielt unterdrückt, so daß das störende Klingeln des Telefons nur durch erneutes Auflegen beendet werden kann.

Der Erfindung liegt die Aufgabe zugrunde, mit Hilfe der bekannten Anrufer-Identifizierung und Rufnummern-Anzeige eine gezielte Unterdrückung unerwünschter Anrufe zu erreichen.

Diese Aufgabe wird gemäß der Erfindung gelöst durch eine

Mit der erfindungsgemäßen Ausbildung wird also unter Benutzung der Anrufernummern-Identifikation der ankommende Anruf identifiziert und dahingehend überprüft, ob dieser Anruf zum Teilnehmer durchgeschaltet wird oder nicht. Hierfür ist auf der Benutzerseite ein Fernsprechverzeichnis vorgesehen, das solche Nummern enthält, deren zugehörige Personen in bestimmten Fällen zum Teilnehmer durchgeschaltet werden dürfen. Dabei erfolgt ein interner Vergleich in der Weise, ob die Anrufernummer in diesem mit besonderer Priorität versehenen Verzeichnis enthalten ist. Bei Übereinstimmung der Anrufernummer mit einer Nummer dieses Verzeichnisses erfolgt eine Durchschaltung zum Teilnehmer, andernfalls wird der Anruf zu einem vorbestimmten Ziel umgeleitet oder auf eine Mail-Box gegeben.

Die vorstehend beschriebene Anruferkontrolle ist auch mit einer Zeitsteuerung realisierbar, so daß die betreffenden Anrufe lediglich während vorgegebenen Zeiten durchgestellt werden und außerhalb dieser Zeit eine entsprechende Rufumleitung erfolgt.

Auf einem in besonderer Weise ausgebildeten Display mit einer Vielzahl von Knotenpunkten (Pixels) aus sich kreuzenden waagerechten und senkrechten Leitungen erfolgen fortlaufend entsprechende graphische Darstellungen, durch welche der Benutzer informiert bzw. vor diesen einschränkenden Maßnahmen gewarnt wird.

## Patentansprüche

1. Mobiltelefon mit einem Tastenfeld mit Wähl- und Funktionstasten, einem Anzeigefeld und mit ggf. im Bedienteil integrierten Sende-/Empfangseinrichtungen (Handheld) sowie mit einer Vorrichtung zur Nummernanzeige des Anrufers und Identifizierung von dessen Rufnummer, die verglichen wird mit nach entsprechenden Kriterien in einem Rufnummernspeicher des Benutzers abgelegten Rufnummern, deren zugehöriger Name am Display angezeigt wird, **gekennzeichnet durch** eine Anruf-Kontrolleinrichtung für die Selektierung der Rufanzeige durch den Benutzer derart, daß der Anruf angenommen und die Anrufsignalisierung initiiert wird, wenn die Rufnummer einer im Nummernspeicher enthaltenen entspricht, und daß bei nicht vorhandener Übereinstimmung der Rufnummer mit einer im Nummernspeicher enthaltener Nummer der Anruf entweder umgeleitet oder an eine Mail-Box gegeben wird.

## Claims

1. Mobile telephone having a key pad with dialling and function keys, a display area and transmitting/receiving devices (handheld) which may be integrated in the control section, as well as having a device for displaying the number of the caller and identification of his telephone number, which is compared with telephone numbers which are stored on the basis of appropriate criteria in a telephone number memory of the user, the name associated with which telephone number is indicated on the display, characterized by a call monitoring device for the selection of the call display by the user in such a manner that the call is received and the call signalling is initiated when the telephone number corresponds with one contained in the numerical memory, and in that, if the telephone number does not correspond with a number contained in the number memory, the call is either diverted or is passed to a mailbox.

## Revendications

1. Téléphone mobile comportant un clavier à touches de numérotation et de fonction, un panneau d'affichage et éventuellement des dispositifs (Handheld) d'émission/réception intégrés à la partie de commande, ainsi qu'un dispositif d'affichage du numéro de l'appelant et d'identification de son numéro d'appel qui est comparé à des numéros d'appel qui sont enregistrés suivant des critères appropriés dans une mémoire de numéros d'appel de l'utilisateur, dont le nom est affiché à l'écran, **caractérisé par** un dispositif de contrôle d'appel pour la sélection de l'affichage des appels par l'utilisateur, de manière que l'appel soit accepté et que la signalisation d'appel soit déclenchée, lorsque le numéro d'appel correspond à l'un de ceux contenus dans la mémoire de numéros d'appel et qu'en cas de non-concordance du numéro d'appel avec un numéro contenu dans la mémoire de numéros d'appel, l'appel soit ou bien transféré ou bien transmis à une boîte aux lettres.
